Europäisches Patentamt

European Patent Office

Office européen des brevets

(11) Publication number : **0 453 402 A1**

# (12) EUROPEAN PATENT APPLICATION

(21) Application number : 91810263.3

(22) Date of filing : 10.04.91

(51) Int. Cl.⁵ : **A23G 3/30**

(30) Priority : 16.04.90 US 510356

(43) Date of publication of application :
23.10.91 Bulletin 91/43

(84) Designated Contracting States :
BE CH DE DK ES FR GB GR IT LI NL SE

(71) Applicant : WARNER-LAMBERT COMPANY
201 Tabor Road
Morris Plains New Jersey 07950 (US)

(72) Inventor : Bilka, Kenneth P.
91 Tulip Avenue, Apt. Sunset G-L1
Floral Park NY 11001 (US)
Inventor : Corsello, Vincent
2 Sycamore Terrace
Cedar Knolls, New Jersey 07927 (US)
Inventor : Glass, Michael
10-15 Ellis Avenue
Fair Lawn, New Jersey 07410 (US)
Inventor : O'Connor, Pamela J.
27 Adelphia Road
Lake Persippany, New Jersey 07054 (US)

(74) Representative : Silbiger, Jakob, Dr.
c/o CAPSUGEL AG Fabrikmattenweg 2-4
CH-4144 Arlesheim (CH)

(54) Chewing gum compositions containing xylitol and sucrose and methods for preparing same.

(57)   The present invention pertains to a sweetened chewing gum composition having enhanced, clean tasting flavor which comprises (a) a gum base, (b) a bulk sweetening agent comprising xylitol and sucrose, wherein xylitol is present in an amount from about 10% to about 15%, by weight of the chewing gum composition, (c) a binding agent, and (d) a flavoring agent. The present invention also pertains to methods for preparing the sweetened chewing gum compositions.

EP 0 453 402 A1

This invention pertains to a sweetened chewing gum composition having enhanced, clean tasting flavor. More particularly, this invention pertains to a synergistic effect found between the combination of xylitol and sucrose in a chewing gum. This invention also relates to methods for preparing these sweetened chewing gum compositions.

Chewing gums typically contain a waterinsoluble chewable gum base, a bulking agent, and other additives such as an intense sweetening agent and a flavoring agent. Usually the gum base also contains plasticizers or softeners to improve the consistency and texture of the gum. The bulking agent generally comprises water-soluble sweeteners such as sucrose or corn syrup, or in sugarless gums, sorbitol or mannitol together with an artificial sweetener.

A commonly noted problem with chewing gums is the relatively rapid exhaustion of sweetness and flavor sensation during chewing. This loss frequently occurs within the first 3 to 5 minutes of chewing. Accordingly, chewing gums having enhanced sweetness and flavor sensation would be desirable.

Sweetening agents (sweeteners) are well known in the art and are widely used as substitutes for sugar in many low calorie and noncariogenic compositions. Sweetening agents have a wide range of chemically distinct structures and hence possess varying properties. Because each sweetening agent is chemically distinct, each sweetener presents a different challenge with respect to the actual use of such sweetener in ingestible compositions.

United States patent no. 4,284,650, issued to Goupil, discloses a chewing gum composition which comprises a mixture of xylitol and sorbose present in a ratio by weight from about 1:10 to about 10:1.

United States patent no. 4,217,368, issued to Witzel et al.and assigned to Life savers, Inc., discloses a chewing gum composition which comprises a first sweetening agent in a water-soluble phase and a second sweetening agent in a water-insoluble phase. The first sweetening agent and second sweetening agent may be selected from a group which includes sucrose and xylitol.

United States patent no. 4,279,931, issued to Hopkins et al., disclose a chewing gum composition which comprises a combination of a hydrogenated starch hydrolysate and sorbitol and optionally other sweetening agents which include sucrose and xylitol.

United States patent no. 4,065,578, issued to Reggio et al. and assigned to Life Savers, Inc., discloses a chewing gum comprising xylitol as the bulk sweetening agent and a hydrocolloid as a binder and humectant.

United States patent Re. 30,197, issued to Klose et al. and assigned to General Foods Corporation, discloses a chewing gum comprising a gum base, sweetening agent, a flavoring agent, and xylitol present in an amount less than 10% by weight of the composition.

United States patent no. 3,899,593, issued to Hammond et al. and assigned to General Foods corporation, discloses a sugarless chewing gum comprising a gum base, a sweetening agent, a flavoring agent, and xylitol.

PCT application no. PCT/US89/00074, filed January 9, 1989, to Wm. Wrigley Jr. Company, discloses a chewing gum employing xylitol as a rolling or dusting compound.

Thus, a variety of combinations of sweetening agents are known which have specific sweetness intensities compared to sucrose. There is still a need, however, for sweetening compositions which have varying properties and enhanced sweetening and flavoring intensities for use in chewing gum compositions. The present invention provides such a sweetened chewing gum composition having enhanced flavor.

The present invention pertains to a sweetened chewing gum composition having enhanced, clean tasting flavor which comprises (a) a gum base, (b) a bulk sweetening agent comprising xylitol and sucrose, wherein xylitol is present in an amount from about 10% to about 15%, by weight of the chewing gum composition, (c) a binding agent, and (d) a flavoring agent. The present invention also pertains to methods for preparing the sweetened chewing gum compositions.

The present invention pertains to a sweetened chewing gum composition having enhanced, clean tasting flavor which comprises (a) a gum base, (b) a bulk sweetening agent comprising xylitol and sucrose, wherein xylitol is present in an amount from about 10% to about 15%, by weight of the chewing gum composition, (c) a binding agent, and (d) a flavoring agent. The present invention also pertains to methods for preparing the sweetened chewing gum compositions.

Applicants have found that the combination of xylitol and sucrose in a chewing gum results in a synergistic composition having enhanced, clean tasting flavor characteristics. Chewing gum compositions containing the synergistic composition are juicier, cleaner and fresher. The flavor intensity sensation of the gums of the present composition are markedly greater than that expected by mere combination of the sweetening agents.

The synergistic compositions of the present invention consist of a bulk sweetening agent comprising xylitol and sucrose. Xylitol is a non-cariogenic sugar alcohol which has a clean sugar-like sweetness with a fresh, clean taste. Xylitol is a pentitol derivative derived from xylose, a sugar found in fruits, cereals, and vegetables. In a preferred embodiment, the sweetened chewing gum composition of the present invention comprises xylitol present in an amount from about 10% to about 15%, preferably from about 12% to about 15%, and more preferably about 15%, by weight of the chewing gum composition.

The present invention includes a method for preparing the improved chewing gum compositions having enhanced flavor, including both chewing gum and bubble gum formulations. In general, the improved chewing gum compositions comprise a gum base, an effective amount of the bulk sweetening agent comprising xylitol and sucrose, and various additives such as a binding agent and a flavoring agent.

The chewing gum compositions may be reduced-calorie chewing gums employing high levels of a chewing gum base having an enhanced hydrophillic character. These reduced-calorie chewing gums will comprise a gum base present in an amount from about 50% to about 95%, preferably from about 50% to about 85%, and more preferably from about 60% to about 70%, by weight of the chewing gum composition. When a reduced-calorie product is not desired, the chewing gum composition may contain lower amounts of a chewing gum base. These chewing gums will comprise a gum base present in an amount up to about 55%, preferably from about 15% to about 40%, and more preferably from about 20% to about 35%, by weight of the chewing gum composition.

Chewing gum compositions employing a high level of a chewing gum base having an enhanced hydrophillic character are more fully described in United States patent application serial no. 939,918, filed December 10, 1986, which disclosure is incorporated herein by reference.

As used herein, the term "reduced-calorie composition" means a composition having a caloric value two thirds or less than that of a conventional composition. The term "tight" or "rubbery" chew refers to a chewing gum composition which requires a large amount of muscular chewing effort to masticate or to a composition which provides a gum bolus with high elasticity and bounce and which is difficult to deform.

Gum bases having an enhanced hydrophillic character include polyvinyl acetate gum bases which may also contain a low melting point wax. Such gum bases do not require a high level of bulking agent to plasticize the gum base and render it soft during chewing. These gum bases may be used at higher than normal levels in chewing gum compositions in place of a bulking and/or a bulk sweetening agent to prepare high base-low bulking agent reduced-calorie gums which do not have rubbery or tight chew characteristics. These gum bases possess increased hydrophillic properties over conventional gum bases and appear to increase in size during chewing releasing flavoring and sweetening agents which would normally be entrapped in the gum base while maintaining a soft chew texture. Reduced-calorie chewing gum compositions prepared with such gum bases in high levels are less hygroscopic (have low moisture-pickup) and are less prone to becoming stale than conventional reduced calorie gum compositions while having comparable firmness and texture.

The elastomers (rubbers) employed in the gum base of the present invention will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum base include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, and the like, and mixtures thereof.

The amount of elastomer employed in the gum base will vary greatly depending upon various factors such as the type of gum base used, the consistency of the gum composition desired and the other components used in the composition to make the final chewing gum product. In general, the elastomer will be present in the gum base in an amount from about 0.5% to about 20%, and preferably from about 2.5% to about 15%, by weight of the gum base.

The polyvinyl acetate polymer employed in the gum base of the present invention is a polyvinyl acetate polymer having a medium molecular weight, specifically, having a mean average molecular weight in the range from about 35,000 to about 55,000. This medium molecular weight polyvinyl acetate polymer will preferably have a viscosity from about 35 seconds to about 55 seconds (ASTM designation D1200-82 using a Ford cup viscometer procedure).

The medium molecular weight polyvinyl acetate polymer will be present in the gum base in an amount from about 10% to about 25%, and preferably from about 12% to about 27%, by weight of the gum base.

The medium molecular weight polyvinyl acetate polymer may also be blended with a low molecular weight polyvinyl acetate polymer. The low molecular weight polyvinyl acetate polymer will have a mean average molecular weight in the range from about 12,000 to about 16,000. This low molecular weight polyvinyl acetate polymer will preferably have a viscosity from about 14 seconds to about 16 seconds (ASTM designation D1200-82 using a Ford cup viscometer procedure). The low molecular weight polyvinyl acetate polymer will be present in the gum base in an amount up about 17%, and preferably from about 12% to about 17%, by weight of the gum base.

When a low molecular weight polyvinyl acetate polymer is blended with a medium molecular weight polyvinyl acetate polymer, the polymers will be present in a mole ratio from about 1:0.5 to about 1:1.5, respectively.

The medium molecular weight polyvinyl acetate polymer may also be blended with a high molecular weight polyvinyl acetate polymer. The high molecular weight polyvinyl acetate polymer will have a mean average molecular weight in the range from about 65,000 to about 95,000. The high molecular weight polyvinyl acetate polymer will be present in the gum base in an amount up to about 5%, by weight of the gum base.

The acetylated monoglycerides in the present invention, like the polyvinyl acetate polymer, serve as plasticizing agents. While the saponification value of the acetylated monoglycerides is not critical, preferable saponification values are 278 to 292, 316 to 331, 370 to 380 and 430 to 470. A particularly preferred acetylated monoglyceride has a saponification value above about 400. Such acetylated monoglycerides generally have an acetylation value (percentage acetylated) above about 90 and a hydroxyl value below about 10 (Food Chemical Codex (FCC) 111/P508 and the revision of AOCS).

The use of acetylated monoglycerides in the present gum base is preferred over the use of bitter polyvinyl acetate (PVA) plasticizers, in particular, triacetin. The acetylated monoglycerides will be present in the gum base in an amount from about 4.5% to about 10%, and preferably from about 5% to about 9%, by weight of the gum base.

The wax in the gum base of the present invention softens the polymeric elastomer mixture and improves the elasticity of the gum base. The waxes employed will have a melting point below about 60° C., and preferably between about 45° C. and about 55° C. A preferred wax is low melting paraffin wax. The wax will be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnauba wax, most petroleum waxes, and the like, and mixtures thereof.

In addition to the components set out above, the gum base includes a variety of traditional ingredients, such as a component selected from the group consisting of elastomer solvents, emulsifiers, plasticizers, fillers, and mixtures thereof. These ingredients are present in the gum base in an amount to bring the total amount of gum base to 100%.

The gum base may contain elastomer solvents to aid in softening the elastomer component. Such elastomer solvents may comprise those elastomer solvents known in the art, for example, terpinene resins such as polymers of alpha-pinene or beta-pinene, methyl, glycerol and pentaerythritol esters of rosins and modified rosins and gums, such as hydrogenated, dimerized and polymerized rosins, and mixtures thereof. Examples of elastomer solvents suitable for use herein include the pentaerythritol ester of partially hydrogenated wood and gum rosin the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. A preferred emulsifier is glyceryl monostearate. The emulsifier may be employed in amounts from about 2% to about 15%, and preferably from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycolmonostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20%, and preferably in amounts from about 9% to about 17%, by weight of the gum base.

Preferred plasticizers are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and preferably in amounts from about 5% to about 13.5%, by weight of the gum base.

In another preferred embodiment, the softening agent is anhydrous glycerin, such as the commercially available United States Pharmacopeia (USP) grade. Glycerin is a syrupy liquid with a sweet warm taste and has a sweetness of about 60% of that of cane sugar.

The gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, and the like, and mixtures thereof. These fillers or adjuvants may be used in the gum base compositions in various amounts. Preferably the amount of filler, when used, will be present in an amount from about 15% to about 40%, and preferably from about 20% to about 30%, by weight of the gum base.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

The manner in which the gum base components are admixed is not critical and is performed using standard techniques and apparatus known to those skilled in the art. In a typical method, an elastomer is admixed with an elastomer solvent and/or a plasticizer and/or an emulsifier and agitated for a period from 1 to 30 minutes. After blending is complete, the polyvinyl acetate component is admixed into the mixture. The medium molecular weight polyvinyl acetate is preferably admixed prior to addition of the optional low molecular weight polyvinyl acetate to prevent the creation of pockets of polyvinyl acetate within the elastomer mixture. The remaining ingredients, such as the low melting point wax, are then admixed, either in bulk or incrementally, while the gum base mixture is blended again for 1 to 30 minutes.

Other gum bases having an enhanced hydrophilic nature and suitable for use in reduced-calorie chewing gum compositions in high levels may also be employed in the present invention. In general, these gum bases may be employed in amounts up to 99%, preferably from about 40% to about 85%, and more preferably from about 40% to about 75%, by weight of the chewing gum composition. Suitable gum bases having an enhanced hydrophilic nature include, for example, those disclosed in United States patent no. 4,698,223, which disclosure is incorporated herein by reference. The gum base is formulated with the inventive synergistic composition and conventional additives such as a bulking agent to prepare a wide variety of sweetened chewing gum compositions.

The amount of gum base employed in the chewing gum composition will vary depending on such factors as the type of gum base used, the consistency desired, and the other components used to make the final chewing gum product. In general, the gum base having an enhanced hydrophilic character will be present in the chewing gum composition in an amount- from about 50% to about 95%, preferably from about 50% to about 85%, and more preferably from about 60% to about 70%, by weight of the chewing gum composition.

In one embodiment, the reduced-calorie chewing gum composition comprises a gum base which comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base.

In another embodiment, the invention pertains to a chewing gum composition which contains lower amounts of a chewing gum base, i.e., gum base present in an amount up to about 55%, preferably from about 15% to about 40%, and more preferably from about 20% to about 35%, by weight of the chewing gum composition. In this embodiment, the gum base will comprise an elastomer and a variety of traditional ingredients such as an elastomer solvent, waxes, emulsifiers, plasticizers or softeners, bulking agents such as mineral adjuvants which may serve as fillers and textural agents, coloring agents, antioxidants, preservatives, flavoring agents, and the like, and mixtures thereof. Illustrative examples of these gum base components have been set out above.

Once prepared, the gum base may be formulated with the bulk sweetening agent comprising xylitol and sucrose of the present invention and other additives such as a binding agent, and a flavoring agent to prepare a wide variety of chewing gum compositions.

Suitable sugar bulking agents include monosaccharides, disaccharides and polysaccharides such as xyl-

5

ose, ribulose, glucose (dextrose), mannose, galactose, fructose (levulose), sucrose (sugar), maltose, invert sugar, partially hydrolyzed starch and corn syrup solids, and mixtures thereof. Mixtures of sucrose and corn syrup solids are the preferred sugar bulking agents. In a preferred embodiment, the sucrose is present in an amount from about 25% to about 60%, preferably from about 30% to about 55%, and more preferably from about 35% to about 55%, by weight of the chewing gum composition.

The chewing gum composition may also include other bulking agents. These bulking agents (carriers, extenders) may be water-soluble and include sweetening agents selected from the group consisting of, but not limited to, monosaccharides, disaccharides, polysaccharides, sugar alcohols, and mixtures thereof; randomly bonded glucose polymers such as those polymers distributed under the tradename POLYDEXTROSE by Pfizer, Inc., Groton, Connecticut; isomalt (a racemic mixture of alpha-D-glucopyranosyl-1,6-mannitol and alpha-D-glucopyranosyl-1,6-sorbitol manufactured under the tradename PALATINIT by Suddeutsche Zucker), maltodextrins; hydrogenated starch hydrolysates; hydrogenated hexoses; hydrogenated disaccharides;minerals, such as calcium carbonate, talc, titanium dioxide, dicalcium phosphate, celluloses and the like, and mixtures thereof. In general, the additional bulking agents may be used in effective amounts.

As set out above, the sweetened chewing gum of the present invention comprises xylitol present in an amount from about 10% to about 15%, preferably in an amount from about 12% to about 15%, and more preferably in an amount from of about 15%, by weight of the chewing gum composition. Other sugar alcohol bulking agents which may also be present include sorbitol, xylitol, mannitol, galactitol, maltitol, and mixtures thereof.

The chewing gum composition also includes an effective amount of a binding agent. Suitable binding agents in the present invention are corn syrup, glycerin, high fructose corn syrup, and the like, and mixtures thereof. In general the binding agent will be present in an amount from about 10% to about 20%, preferably from about 12% to about 20%, and more preferably from about 15% to about 20%, by weight of the chewing gum composition.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing , publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5heptenal, i.e., melonal (melon), 2,6-dimethyloctanal (green fruit), and 2-dodecenal (citrus, mandarin), cherry, grape, strawberry shortcake, mixtures thereof and the like.

The flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well known and do not constitute a part of this invention.

The flavoring agents of the present invention may be used in many distinct physical forms well known in the art to provide an initial burst of flavor and/or a prolonged sensation of flavor. Without being limited thereto, such physical forms include free forms, such as spray dried, powdered, and beaded forms, and encapsulated forms, and mixtures thereof.

Encapsulated delivery systems for flavoring agents or sweetening agents comprise a hydrophobic matrix of fat or wax surrounding a sweetening agent or flavoring agent core. The fats may be selected from any number of conventional materials such as fatty acids, glycerides or polyglycerol esters, sorbitol esters, and mixtures thereof. Examples of fatty acids include hydrogenated and partially hydrogenated vegetable oils such as palm oil, palm kernel oil, peanut oil, rapeseed oil, rice bran oil, soybean oil, cottonseed oil, sunflower oil, safflower oil, and mixtures thereof. Glycerides which are useful include monoglycerides, diglycerides, and triglycerides.

Waxes useful may be chosen from the group consisting of natural and synthetic waxes, and mixtures thereof. Non-limiting examples include paraffin wax, petroleum, carbowax, microcrystalline wax, beeswax, carnauba wax, candellila wax, lanolin, bayberry wax, sugarcane wax, spermaceti wax, rice bran wax, and mixtures thereof.

The fats and waxes may be used individually or in combination in amounts varying from about 10 to about 70%, and preferably in amounts from about 40 to about 58%, by weight of the encapsulated system. When used in combination, the fat and wax are preferably present in a ratio from about 70:10 to 85:15, respectively.

Typical encapsulated flavoring agent or sweetening agent delivery systems are disclosed in United States patents no. 4,597,970 and 4,722,845, which disclosures are incorporated herein by reference.

The amount of flavoring agent employed herein is normally a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and preferably from about 0.1% to about 2%, and more preferably, from about 0.8% to about 1.8%, by weight of the chewing gum composition.

The gum composition may include effective amounts of conventional additives selected from the group consisting of plasticizers, softeners, emulsifiers, waxes, fillers, mineral adjuvants, flavoring agents (flavors, flavorings), coloring agents (colorants,colorings), antioxidants, acidulants, thickening agents, and the like, and mixtures thereof. These ingredients are present in the chewing gum composition in an amount to bring the total amount of chewing gum composition to 100%. Some of these additives may serve more than one purpose. For example, in sugarless gum compositions, a sweetener, such as sorbitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickening agents, used alone or in combination with other softeners, such as methyl cellulose, alginates, carrageenan, xanthan gum, gelatin, carob, tragacanth, and locust bean, acidulants such as malic acid, adipic acid, citric acid, tartaric acid, fumaric acid, and mixtures thereof, and fillers, such as those discussed above under the category of mineral adjuvants.

The coloring agents useful in the present invention are used in amounts effective to produce the desired color. These coloring agents include pigments which may be incorporated in amounts up to about 6%, by weight of the gum composition. A preferred pigment, titanium dioxide, may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino)diphenylmethylene]-[1-(N-ethyl-N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

Suitable oils and fats usable in gum compositions include partially hydrogenated vegetable or animal fats, such as coconut oil, palm kernel oil, beef tallow, lard, and the like. These ingredients when used are generally present in amounts up to about 7%, and preferably up to about 3.5%, by weight of the gum composition. In a preferred embodiment, the chewing gum compositions of the present invention are prepared according to the formulas set out below.

| Ingredient | Percentage Range by Weight |
|---|---|
| gum base | 20.00 - 21.00 |
| corn syrup | 16.50 - 17.00 |
| lecithin | 0.20 - 0.30 |
| cerelose 2001 | 0.00 - 6.00 |
| coloring agent | 0.13 - 0.50 |
| flavoring agent | 0.50 - 1.270 |
| glycerin | 0.45 - 1.00 |
| intense sweetener | 2.25 - 4.47 |
| sucrose | 33.28 - 54.37 |
| xylitol | 10.00 - 15.00 |

The present invention also includes a method for preparing the improved chewing gum compositions, including both chewing gum and bubble gum formulations. The chewing gum compositions may be prepared using standard techniques and equipment known to those skilled in the art. The apparatus useful in accordance with the present invention comprises mixing and heating apparatus well known in the chewing gum manufacturing arts, and therefore the selection of the specific apparatus will be apparent to the artisan.

In such a method, a chewing gum composition is made by admixing the gum base with the bulk sweetening agent comprising xylitol and sucrose and the other ingredients of the final desired chewing gum composition. Other ingredients will usually be incorporated into the composition as dictated by the nature of the desired composition as well known by those having ordinary skill in the art. The ultimate chewing gum compositions are readily prepared using methods generally known in the food technology and chewing gum arts.

For example, the gum base is heated to a temperature sufficiently high to soften the base without adversely effecting the physical and chemical make up of the base. The optimal temperatures utilized may vary depending upon the composition of the gum base used, but such temperatures are readily determined by those skilled in the art without undue experimentation.

The gum base is conventionally melted at temperatures that range from about 60° C. to about 120° C. for a period of time sufficient to render the base molten. For example, the gum base may be heated under these conditions for a period of about thirty minutes just prior to being admixed incrementally with the bulk sweetening agent comprising the xylitol and sucrose and the remaining ingredients of the gum composition such as a binding agent, a flavoring agent, a plasticizer, a softener, a bulking agent, a filler, and a coloring agent to plasticize the blend as well as to modulate the hardness, viscoelasticity and formability of the base. Mixing is continued until a uniform mixture of gum composition is obtained. Thereafter the gum composition mixture may be formed into desirable chewing gum shapes.

In another embodiment, the invention is directed to a method for preparing a sweetened chewing gum composition having enhanced flavor. The method comprises the steps of:

(A) providing the following ingredients:
(a) a gum base,
(b) a bulk sweetening agent comprising xylitol and sucrose, wherein xylitol is present in an amount from about 10% to about 15%, by weight of the chewing gum composition,
(c) a binding agent, and
(d) a flavoring agent;
(B) melting the gum base; and
(C) admixing the sucrose, xylitol, binding agent, and the flavoring agent into the melted gum base of step (B) to form a homogeneous mixture.

The present invention is further illustrated by the following examples which are not intended to limit the effective scope of the claims. All parts and percentages in the examples and throughout the specification and claims are by weight of the final composition unless otherwise specified.

EXAMPLES 1-24

These Examples demonstrate the synergistic effect of the combination of xylitol and sucrose in chewing gum compositions.

Xylitol and sucrose were combined to formulate the test chewing gum compositions of Examples 1-24, which contained varying amounts of xylitol in sucrose. Examples 1-6 employed a peppermint flavoring agent, Examples 7-12 employed a spearmint flavoring agent, Examples 13-18 employed a fruit flavoring agent, and Examples 19-24 employed a cinnamon flavoring agent. The compositions of the chewing gums are set out in Tables 1-8. The chewing gum compositions were prepared by conventional chewing gum manufacturing techniques.

## TABLE 1

## CHEWING GUM COMPOSITIONS CONTAINING XYLITOL AND SUCROSE AND PEPPERMINT FLAVORING AGENT

| Ingredient | EXAMPLES (Percent by Weight) | | |
|---|---|---|---|
| | 1 | 2 | 3 |
| Gum base | 21.00 | 21.00 | 21.00 |
| Corn Syrup | 16.50 | 16.50 | 16.50 |
| Lecithin | 0.20 | 0.20 | 0.20 |
| Cerelose 2001 | 6.00 | 6.00 | 6.00 |
| Coloring agent | 0.50 | 0.50 | 0.50 |
| Liquid and | | | |
| Spray Dried Flavor * | 1.50 | 1.50 | 1.50 |
| Glycerin | 0.45 | 0.45 | 0.45 |
| Encapsulated | | | |
| Intense Sweetener | 3.75 | 3.75 | 3.75 |
| Xylitol | .0.00 | 5.00 | 10.00 |
| Sucrose ** | 50.10 | 45.10 | 40.10 |

\* Peppermint flavoring agent

\*\* 6x Pulverized

TABLE 2

CHEWING GUM COMPOSITIONS CONTAINING XYLITOL AND SUCROSE
AND PEPPERMINT FLAVORING AGENT

| Ingredient | EXAMPLES (Percent by Weight) | | |
|---|---|---|---|
| | 4 | 5 | 6 |
| Gum base | 21.00 | 21.00 | 21.00 |
| Corn Syrup | 16.50 | 16.50 | 16.50 |
| Lecithin | 0.20 | 0.20 | 0.20 |
| Cerelose 2001 | 6.00 | 6.00 | 6.00 |
| Coloring agent | 0.50 | 0.50 | 0.50 |
| Liquid and | | | |
| Spray Dried Flavor * | 1.50 | 1.50 | 1.50 |
| Glycerin | 0.45 | 0.45 | 0.45 |
| Encapsulated | | | |
| Intense Sweetener | 3.75 | 3.75 | 3.75 |
| Xylitol | 15.00 | 16.00 | 20.00 |
| Sucrose ** | 35.10 | 34.10 | 30.10 |

\* Peppermint flavoring agent

\*\* 6x Pulverized

TABLE 3

CHEWING GUM COMPOSITIONS CONTAINING XYLITOL AND SUCROSE
AND SPEARMINT FLAVORING AGENT

| Ingredient | EXAMPLES | (Percent by Weight) | |
|---|---|---|---|
| | 7 | 8 | 9 |
| Gum base | 21.00 | 21.00 | 21.00 |
| Corn Syrup | 17.00 | 17.00 | 17.00 |
| Lecithin | 0.20 | 0.20 | 0.20 |
| Cerelose 2001 | 6.00 | 6.00 | 6.00 |
| Coloring agent | 0.50 | 0.50 | 0.50 |
| Agglomerated Maltodextrin | 0.75 | 0.75 | 0.75 |
| Liquid and Spray Dried Flavor * | 1.35 | 1.35 | 1.35 |
| Glycerin | 0.45 | 0.45 | 0.45 |
| Encapsulated Intense Sweetener | 4.47 | 4.47 | 4.47 |
| Xylitol | 0.00 | 5.00 | 10.00 |
| Sucrose ** | 48.28 | 43.28 | 38.28 |

\* Spearmint flavoring agent

\*\* 6x Pulverized

11

TABLE 4

CHEWING GUM COMPOSITIONS CONTAINING XYLITOL AND SUCROSE
AND SPEARMINT FLAVORING AGENT

| Ingredient | EXAMPLES (Percent by Weight) | | |
|---|---|---|---|
| | 10 | 11 | 12 |
| Gum base | 21.00 | 21.00 | 21.00 |
| Corn Syrup | 17.00 | 17.00 | 17.00 |
| Lecithin | 0.20 | 0.20 | 0.20 |
| Cerelose 2001 | 6.00 | 6.00 | 6.00 |
| Coloring agent | 0.50 | 0.50 | 0.50 |
| Agglomerated | | | |
| Maltodextrin | 0.75 | 0.75 | 0.75 |
| Liquid and | | | |
| Spray Dried Flavor * | 1.35 | 1.35 | 1.35 |
| Glycerin | 0.45 | 0.45 | 0.45 |
| Encapsulated | | | |
| Intense Sweetener | 4.47 | 4.47 | 4.47 |
| Xylitol | 15.00 | 16.00 | 20.00 |
| Sucrose ** | 33.28 | 32.28 | 28.28 |

\* Spearmint flavoring agent

\*\* 6x Pulverized

TABLE 5

CHEWING GUM COMPOSITIONS CONTAINING XYLITOL AND SUCROSE
AND FRUIT FLAVORING AGENT

| Ingredient | EXAMPLES (Percent by Weight) | | |
|---|---|---|---|
| | 13 | 14 | 15 |
| Gum base | 21.00 | 21.00 | 21.00 |
| Corn Syrup | 16.50 | 16.50 | 16.50 |
| Lecithin | 0.20 | 0.20 | 0.20 |
| Cerelose 2001 | 6.00 | 6.00 | 6.00 |
| Coloring agent | 0.50 | 0.50 | 0.50 |
| Liquid and | | | |
| Spray Dried Flavor * | 1.35 | 1.35 | 1.35 |
| Glycerin | 0.45 | 0.45 | 0.45 |
| Encapsulated | | | |
| Intense Sweetener | 2.25 | 2.25 | 2.25 |
| Xylitol | 0.00 | 5.00 | 10.00 |
| Sucrose ** | 51.75 | 46.75 | 41.75 |

\* Fruit flavoring agent

\*\* 6x Pulverized

TABLE 6

CHEWING GUM COMPOSITIONS CONTAINING XYLITOL AND SUCROSE
AND FRUIT FLAVORING AGENT

| Ingredient | EXAMPLES (Percent by Weight) | | |
|---|---|---|---|
| | 16 | 17 | 18 |
| Gum base | 21.00 | 21.00 | 21.00 |
| Corn Syrup | 16.50 | 16.50 | 16.50 |
| Lecithin | 0.20 | 0.20 | 0.20 |
| Cerelose 2001 | 6.00 | 6.00 | 6.00 |
| Coloring agent | 0.50 | 0.50 | 0.50 |
| Liquid and Spray Dried Flavor * | 1.35 | 1.35 | 1.35 |
| Glycerin | 0.45 | 0.45 | 0.45 |
| Encapsulated Intense Sweetener | 2.25 | 2.25 | 2.25 |
| Xylitol | 15.00 | 16.00 | 20.00 |
| Sucrose ** | 36.75 | 35.75 | 31.75 |

* Fruit flavoring agent

** 6x Pulverized

## TABLE 7

CHEWING GUM COMPOSITIONS CONTAINING XYLITOL AND SUCROSE
AND CINNAMON FLAVORING AGENT

| Ingredient | EXAMPLES (Percent by Weight) | | |
|---|---|---|---|
| | 19 | 20 | 21 |
| Gum base | 20.00 | 20.00 | 20.00 |
| Corn Syrup | 16.50 | 16.50 | 16.50 |
| Lecithin | 0.30 | 0.30 | 0.30 |
| Coloring agent | 0.13 | 0.13 | 0.13 |
| Liquid Flavor * | 1.27 | 1.27 | 1.27 |
| Glycerin | 1.00 | 1.00 | 1.00 |
| Encapsulated Intense Sweetener | 3.37 | 3.37 | 3.37 |
| Xylitol | 0.00 | 5.00 | 10.00 |
| Sucrose ** | 57.43 | 52.43 | 47.43 |

* Cinnamon flavoring agent

** 6x Pulverized

## TABLE 8

### CHEWING GUM COMPOSITIONS CONTAINING XYLITOL AND SUCROSE AND CINNAMON FLAVORING AGENT

| Ingredient | EXAMPLES (Percent by Weight) | | |
|---|---|---|---|
| | 22 | 23 | 24 |
| Gum base | 20.00 | 20.00 | 20.00 |
| Corn Syrup | 16.50 | 16.50 | 16.50 |
| Lecithin | 0.30 | 0.30 | 0.30 |
| Coloring agent | 0.13 | 0.13 | 0.13 |
| Liquid Flavor * | 1.27 | 1.27 | 1.27 |
| Glycerin | 1.00 | 1.00 | 1.00 |
| Encapsulated Intense Sweetener | 3.37 | 3.37 | 3.37 |
| Xylitol | 15.00 | 16.00 | 20.00 |
| Sucrose ** | 42.43 | 41.43 | 37.43 |

\* **Cinnamon flavoring agent**

\*\* **6x Pulverized**

An expert sensory chew panel having experience in the organoleptic evaluation of ingestible products, especially chewing gums, evaluated the chewing gum compositions of Examples 1-24 in terms of overall juiciness, breath-freshening effect and clean enhanced flavor impact. The gums were evaluated in random order and the findings were pooled and averaged.

The chewing gums containing only sucrose, Examples 1, 7, 13, and 19, averaged a rating of 5 in terms of overall juiciness, breath-freshening effect and enhanced flavor impact. The chewing gums containing 5% xylitol in sucrose, Examples 2, 8, 14, and 20, averaged a rating of 7 to 7 . 5 . The chewing gums containing 10% xylitol in sucrose, Examples 3, 9, 15, and 21, averaged a rating of 9 to 9.5. The chewing gums containing 15% xylitol in sucrose, Examples 4, 10, 16, and 22, averaged a rating of 9 to 9.5. The chewing gums containing 16% and 20% xylitol in sucrose, Examples 5-6, 11-12, 17-18, and 23-24, were judged to have no enhanced flavor and to be poor in taste.

Because of the overwhelming cooling effect of xylitol at the concentration levels of 16% and 20% in the gums of Examples 5-6, 11-12, 17-18, and 23-24, the flavor characteristics of the four different flavored gums were judged to be lost. The peppermint flavored gums were judged to have lost their minty flavor and were considered too mentholic. The spearmint flavored gums were judged to be distorted and non-descriptive. The fruit flavored gums were judged to have lost their juiciness and were considered too mentholic. The cinnamon flavored gums were judged to have lost their hot and spicy characteristics and were considered too cooling.

The results show that chewing gums containing from about 10% to about 15% xylitol with sucrose had enhanced flavor characteristics. Above 15% xylitol in sucrose, the strong cooling effect of xylitol overwhelmed the flavoring agent and also made the gums unacceptably soft. Chewing gums containing about 5% xylitol with sucrose had enhanced flavor characteristics but at markedly lower levels.

The invention being thus described, it will be obvious that the same may be varied in many ways. Such variations are not to be regarded as a departure from the spirit and scope of the invention and all such modifications are intended to be included within the scope of the following claims.

The present invention is summarised by the following clauses, numbered 1 - 15, and is defined by the claims appended thereafter.

1. A sweetened chewing gum composition having s enhanced, clean tasting flavor which comprises:

(a) a gum base,

(b) a bulk sweetening agent comprising xylitol and sucrose, wherein xylitol is present in an amount from about 10% to about 15%, by weight of the chewing gum composition,

(c) a binding agent, and

(d) a flavoring agent.

2. The sweetened chewing gum composition according to 1, wherein the gum base is present in an amount from about 15% to about 40%, by weight of the chewing gum composition.

3. The sweetened chewing gum composition according to 1, wherein xylitol is present in an amount from about 12% to about 15%, by weight of the chewing gum composition.

4. The sweetened chewing gum composition according to 3, wherein xylitol is present in an amount of about 15%, by weight of the chewing gum composition.

5. The sweetened chewing gum composition according to 1, wherein sucrose is present in an amount from about 25% to about 60%, by weight of the chewing gum composition.

6. The sweetened chewing gum composition according to 1, wherein the binding agent is present in an amount from about 10% to about 20% weight of the chewing gum composition.

7. The sweetened chewing gum composition according to 1, wherein the flavoring agent is present in an amount from about 0.02% to about 5%, by weight of the chewing gum composition.

8. The sweetened chewing gum composition according to 1, wherein the gum composition comprises the following ingredients:

| Ingredient | Percentage Range by Weight |
|---|---|
| gum base | 20.00 - 21.00 |
| corn syrup | 16.50 - 17.00 |
| lecithin | 0.20 - 0.30 |
| cerelose 2001 | 0.00 - 6.00 |
| coloring agent | 0.13 - 0.50 |
| flavoring agent | 0.50 - 1.270 |
| glycerin | 0.45 - 1.00 |
| intense sweetener | 2.25 - 4.47 |
| sucrose | 33.28 - 54.37 |
| xylitol | 10.00 - 15.00 |

9. A method for preparing a sweetened chewing gum composition having enhanced, clean tasting flavor which comprises:

(A) providing the following ingredients:

(a) a gum base,

(b) a bulk sweetening agent comprising xylitol and sucrose, wherein xylitol is present in an amount from about 10% to about 15%, by weight of the chewing gum composition,

(c) a binding agent, and

(d) a flavoring agent;

(B) melting the gum base; and

(C) admixing the sucrose, xylitol, binding agent, and the flavoring agent into the melted gum base of step (B) to form a homogeneous mixture.

10. The method according to 9, wherein the gum base is present in an amount from about 15% to about 40%, by weight of the chewing gum composition.

11. The method according to 9, wherein xylitol is present in an amount from about 12% to about 15%, by weight of the chewing gum composition.

12. The method according to 11, wherein xylitol is present in an amount of about 15%, by weight of the chewing gum composition.

13. The method according to 9, wherein sucrose is present in an amount from about 25% to about 60%, by weight of the chewing gum composition.

14. The method according to 9, wherein the binding agent is present in an amount from about 10% to about 20% weight of the chewing gum composition.

15. The method according to 9, wherein the flavoring agent is present in an amount from about 0.02% to about 5%, by weight of the chewing gum composition.

16. The method according to 9, wherein the gum composition comprises the following ingredients:

| Ingredient | Percentage Range by Weight |
|---|---|
| gum base | 20.00 - 21.00 |
| corn syrup | 16.50 - 17.00 |
| lecithin | 0.20 - 0.30 |
| cerelose 2001 | 0.00 - 6.00 |
| coloring agent | 0.13 - 0.50 |
| flavoring agent | 0.50 - 1.270 |
| glycerin | 0.45 - 1.00 |
| intense sweetener | 2.25 - 4.47 |
| sucrose | 33.28 - 54.37 |
| xylitol | 10.00 - 15.00 |

## Claims

1. A sweetened chewing gum composition having enhanced, clean tasting flavor which comprises:
   (a) a gum base,
   (b) a bulk sweetening agent comprising xylitol and sucrose, wherein xylitol is present in an amount from about 10% to about 15%, by weight of the chewing gum composition,
   (c) a binding agent, and
   (d) a flavoring agent.

2. The sweetened chewing gum composition according to claim 1, wherein the gum base is present in an amount from about 15% to about 40%, by weight of the chewing gum composition.

3. The sweetened chewing gum composition according to either of claims 1 or 2, wherein xylitol is present in an amount from about 12% to about 15%, by weight of the chewing gum composition, and preferably is present in an amount of about 15%, by weight of the chewing gum composition.

4. The sweetened chewing gum composition according to any preceding claim, wherein sucrose is present in an amount from about 25% to about 60%, by weight of the chewing gum composition.

5. The sweetened chewing gum composition according to any preceding claim, wherein the binding agent is present in an amount from about 10% to about 20% weight of the chewing gum composition.

6. The sweetened chewing gum composition according to any preceding claim, wherein the flavoring agent is present in an amount from about 0.02% to about 5%, by weight of the chewing gum composition.

7. The sweetened chewing gum composition according to any preceding claim, wherein the gum composition comprises the following ingredients:

| Ingredient | Percentage Range by Weight |
|---|---|
| gum base | 20.00 - 21.00 |
| corn syrup | 16.50 - 17.00 |
| lecithin | 0.20 - 0.30 |
| cerelose 2001 | 0.00 - 6.00 |
| coloring agent | 0.13 - 0.50 |
| flavoring agent | 0.50 - 1.270 |
| glycerin | 0.45 - 1.00 |
| intense sweetener | 2.25 - 4.47 |
| sucrose | 33.28 - 54.37 |
| xylitol | 10.00 - 15.00 |

8. A method for preparing the gum composition of any preceding claim, which method comprises:
   (A) providing the following ingredients:
      (a) a gum base,
      (b) a bulk sweetening agent comprising xylitol and sucrose, wherein xylitol is present in an amount from about 10% to about 15%, by weight of the chewing gum composition,
      (c) a binding agent, and
      (d) a flavoring agent;
   (B) melting the gum base; and
   (C) admixing the sucrose, xylitol, binding agent, and the flavoring agent into the melted gum base of step (B) to form a homogeneous mixture.

9. The method according to claim 8, wherein the gum base is present in an amount from about 15% to about 40%, by weight of the chewing gum composition.

10. The method according to either of claims 8 or 9, wherein xylitol is present in an amount from about 12% to about 15%, by weight of the chewing gum composition, and preferably is present in an amount of about 15%, by weight of the chewing gum composition.

11. The method according to claim 10, wherein sucrose is present in an amount from about 25% to about 60%, by weight of the chewing gum composition, wherein the binding agent is present in an amount from about 10% to about 20% weight of the chewing gum composition, and wherein the flavoring agent is present in an amount from about 0.02% to about 5%, by weight of the chewing gum composition.

**European Patent Office**

# EUROPEAN SEARCH REPORT

Application Number

EP 91 81 0263

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 907 895 (W.M. WRIGLEY JR. COMPANY) * page 10, example 1; claims 1-10 * --- | 1-11 | A 23 G 3/30 |
| X | WO-A-8 908 989 (W.M. WRIGLEY JR. COMPANY) * abstract; claims 1-10 * --- | 1-11 | |
| X | US-E- 30 197 (R.E. KLOSE et al.) * abstract; claims 1-12 * --- | 1-3 | |
| A | US-A-4 127 677 (P.R. FRONCZKOWSKI et al.) * column 4; examples * ----- | 1,7 | |
| | | | **TECHNICAL FIELDS SEARCHED (Int. Cl.5)** |
| | | | A 23 G 3/00 |

The present search report has been drawn up for all claims

| Place of search | Date of completion of the search | Examiner |
|---|---|---|
| BERLIN | 04-07-1991 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)